# EUROPÄISCHE PATENTSCHRIFT

(11) **EP 3 035 465 B1**
(45) Veröffentlichungstag und Bekanntmachung des Hinweises auf die Patenterteilung: **21.08.2019**
(21) Anmeldenummer: 15306938.0
(22) Anmeldetag: 04.12.2015
(51) Int. Cl.: H02G 3/12

(54) **INSTALLATIONSKASTEN MIT BEFESTIGUNGSVORRICHTUNG UND VERFAHREN ZUR MONTAGE EINES INSTALLATIONSKASTENS**
INSTALLATION CABINET WITH FASTENING DEVICE AND METHOD FOR INSTALLING AN INSTALLATION CABINET
COFFRET D'INSTALLATION AVEC DISPOSITIF DE FIXATION ET MÉTHODE DE MONTAGE D'UN COFFRET D'INSTALLATION

(30) Priorität: 17.12.2014 DE 102014226307
(43) Veröffentlichungstag der Anmeldung: 22.06.2016
(73) Patentinhaber: Hager Electro GmbH & Co. KG, 66440 Blieskastel (DE)
(72) Erfinder: TORNOS NUNEZ, Sergi, 08480 Barcelona (ES); THEUER, Markus, 66131 ENSHEIM (DE)
(74) Vertreter: Nuss, Laurent

(56) Entgegenhaltungen:
- DE-A1-102007 040 212
- DE-A1-102008 008 164
- DE-T2- 69 815 941
- FR-A1- 2 744 849
- US-A- 2 126 259

## Beschreibung

Die Erfindung betrifft einen Installationskasten, insbesondere Verteilerkasten, mit wenigstens einer Befestigungsöffnung, umfassend eine Befestigungsvorrichtung, mittels welcher der Installationskasten in einer in eine Wandschale eingebrachten Wandschalenöffnung befestigt ist. Die Erfindung betrifft ferner ein Verfahren zur Montage eines solchen Installationskastens.

Aus den Druckschriften EP 2 132 448 B1, EP 2 181 488 B1, EP 2 240 988 B1 und WO 00/65702 sind Installationskästen mit Befestigungsvorrichtungen bekannt, die außenseitig an einer Wand eines Installationskastens angeordnet sind und an einen Greifabschnitt umfassen, der geeignet ist, an einer Rückseite, einer Wandschale anzugreifen, um den Installationskasten in einer in der Wandschale eingebrachten Öffnung fest zu legen. Zur Befestigung des Installationskastens in der Wandschalenöffnung wird der Installationskasten mit eingefahrenen bzw. eingeklappten Befestigungselementen in der Wandschalenöffnung angeordnet. Anschließend werden die Befestigungselemente zur Rückseite der Wandschale hin verschwenkt, um den Greifabschnitt mit der Rückseite der Wandschale in Eingriff zu bringen, beispielsweise durch Drehen einer Schraube. Diese Befestigungsvorrichtungen sind jedoch mit einem hohen konstruktiven Aufwand verbunden und daher kostenintensiv in der Herstellung.

Aus der US 2,126,259 A ist ein Installationskasten bekannt, der mittels Klemmarmen in einer Wandschalenöffnung festgeklemmt werden kann. Die Klemmarme werden von aussen in Gehäuseöffnungen des Installationskastens teilweise eingeführt, bis ein Teil der Klemmarme in einen Innenraum des Installationskastens hineinragt. Nach Einsetzen des Installationskastens in die Wandschalenöffnung werden die Klemmarme wieder durch die Gehäuseöffnungen nach aussen geschoben. Die Verschwenkung in Richtung einer Rückseite der Wandschale erfolgt mittels Exzenterklemmvorrichtungen.

Die Aufgabe der vorliegenden Erfindung ist es, einen Installationskasten mit einer Befestigungsvorrichtung bereitzustellen, die einfach und kostengünstig herzustellen ist sowie eine einfache und sichere Befestigung des Installationskastens in der Wandschalenöffnung ermöglicht. Erfindungsgemäß wird diese Aufgabe durch einen Installationskasten gelöst, der eine Befestigungsvorrichtung umfasst, die wenigstens ein Befestigungselement mit einer einer Rückseite der Wandschale abgewandten ersten Seite und einer der Rückseite der Wandschale zugewandten zweiten Seite umfasst. Das Befestigungselement umfasst einen Greifarm mit einem ersten Ende und einem Greifabschnitt, der benachbart zu dem ersten Ende an der zweiten Seite des Befestigungselements angeordnet ist, wobei der Greifabschnitt geeignet ist, an der Rückseite anzugreifen. Der Installationskasten weist eine einem Innenraum zugewandte Innenseite, eine einem Außenraum zugewandte Außenseite und wenigstens eine Befestigungsöffnung auf. Das Befestigungselement ist zumindest teilweise durch die Befestigungsöffnung mit dem ersten Ende voran in einer parallel zum Kastenboden verlaufenden Richtung vom Innenraum zum Außenraum hindurchgeführt, um den Greifarm mit der Rückseite der Wandschale in Berührung zu bringen. Die erste Seite umfasst einen ersten Auflageabschnitt, der auf einem benachbart zur Befestigungsöffnung angeordneten ersten Auflagebereich des Installationskastens aufliegt, um einen Angelpunkt zu bilden. Die zweite Seite umfasst einen zweiten Auflageabschnitt, der auf einem benachbart zur Befestigungsöffnung angeordneten zweiten Auflagebereich des Installationskastens aufliegt, um einer Schwenkbewegung des Greifarms von der Rückseite weg entgegen zu wirken

Diese Ausgestaltung ermöglicht eine einfache und sichere Befestigung des Installationskastens in der Wandschalenöffnung. Diese Ausgestaltung ermöglicht ebenfalls, den konstruktiven Aufwand der aus dem Stand der Technik bekannten Befestigungsvorrichtungen zu verringern.

Vorzugsweise umfasst der Installationskasten einen Randabschnitt, der um einen Öffnungsrand des Installationskastens gebildet ist und der in der bestimmungsgemäßen Lage des Installationskastens in der Wandschalenöffnung auf einer Vorderseite der Wandschale anliegt.

In einer bevorzugten Ausgestaltung ist das Befestigungselement in einer Richtung, die parallel zur Wandschale verläuft, zumindest teilweise durch die Befestigungsöffnung vom Innenraum zum Außenraum hindurchgeführt.

Vorzugsweise ist das Befestigungselement einstückig ausgebildet. In einer bevorzugten Ausgestaltung ist das Befestigungselement aus Kunststoff gefertigt.

Vorzugsweise ist die Befestigungsöffnung annähernd rechteckförmig ausgebildet.

Vorzugsweise umfasst die Befestigungsvorrichtung vier Befestigungselemente und der Installationskasten umfasst vier Befestigungsöffnungen, die benachbart zu Ecken des Installationskastens angeordnet sind.

In einer bevorzugten Ausgestaltung weist das Befestigungselement benachbart zu einem zweiten Ende einen Anschlag auf, wobei der Installationskasten benachbart zur Befestigungsöffnung an der Innenseite wenigstens einen Anschlagabschnitt umfasst, wobei der Anschlag derart ausgestaltet ist, dass nach dem teilweise Hindurchführen des Befestigungselements durch die Befestigungsöffnung der Anschlag dem Anschlagabschnitt gegenüber legbar ist, vorzugsweise an den Anschlagabschnitt anlegbar ist.

Durch diese Ausgestaltung lässt sich in einfacher Weise eine Bestimmungslage des Befestigungselements bezüglich des Installationskastens bestimmen, vorzugsweise dann, wenn der Anschlag an dem Anschlagabschnitt anliegt.

Vorzugsweise ist der Anschlag durch wenigstens einen Vorsprung gebildet, der im Wesentlichen quer zu einer Erstreckungsrichtung des Befestigungselements vorspringt.

Vorzugsweise verbindet der Anschlag das Befestigungselement derart mit dem Installationskasten, dass der Anschlag und/oder das zweite Ende bei dem zumindest teilweisen Hindurchführen des Befestigungselements durch die Befestigungsöffnung formschlüssig im Innenraum gehalten wird.

Durch diese Ausgestaltung wird ein vollständiges Hindurchtreten des Befestigungselements durch die Befestigungsöffnung verhindert.

Erfindungsgemäß umfasst die erste Seite einen ersten Auflageabschnitt, der auf einem benachbart zur Befestigungsöffnung angeordneten ersten Auflagebereich des Installationskastens aufliegt, um einen Angelpunkt zu bilden.

Vorzugsweise ist der erste Auflagebereich durch eine Kante der Befestigungsöffnung gebildet. Weiterhin vorzugsweise ist der erste Auflagebereich durch eine untere Kante der Befestigungsöffnung, die einen Rand der Befestigungsöffnung begrenzt, der dem Kastenboden am nächsten angeordnet ist, gebildet.

Vorzugsweise bildet das Befestigungselement von dem Angelpunkt bis zum Greiffabschnitt einen ersten Hebelarm bzw. einen Lastarm eines Hebels, wobei der Hebel durch das Befestigungselement gebildet ist.

Erfindungsgemäß umfasst die zweite Seite einen zweiten Auflageabschnitt, der auf einem benachbart zur Befestigungsöffnung angeordneten zweiten Auflagebereich des Installationskastens aufliegt, um einer Schwenkbewegung des Greifarms von der Rückseite weg entgegen zu wirken.

In einer bevorzugten Ausgestaltung ist der zweite Auflagebereich durch eine Fläche gebildet, die annähernd parallel zum Kastenboden verläuft und/oder in der Richtung, in welcher das Befestigungselement teilweise durch die Befestigungsöffnung vom Innenraum zum Außenraum hindurchführbar ist, auf den Kastenboden zuläuft.

Vorzugsweise geht die Fläche, die den zweiten Auflagebereich bildet, in der Richtung, in welcher das Befestigungselement teilweise durch die Befestigungsöffnung vom Innenraum zum Außenraum hindurchführbar ist, in eine obere Kante der Befestigungsöffnung über, wobei die obere Kante vorzugsweise der unteren Kante gegenüberliegt.

In einer weiteren bevorzugten Ausgestaltung sind der erste Auflagebereich und der zweite Auflagebereich derart ausgebildet, dass das Hindurchführen des Befestigungselements in der Richtung ein Zubewegen des Greifabschnitts auf die Rückseite der Wandschale bewirkt.

Vorzugsweise bildet das Befestigungselement vom Angelpunkt zum zweiten Auflagebereich einen zweiten Hebelarm des Hebels.

Wenn der zweite Auflageabschnitt auf dem zweiten Auflagebereicht aufliegt, wirkt der zweite Hebel einer Schwenkbewegung um den Angelpunkt des zweiten Hebelarms von der Rückseite der Wandschale weg entgegen.

In einer bevorzugten Ausgestaltung ist der Greifarm als Federelement ausgebildet.

Diese Ausgestaltung erlaubt ein einfaches Fixieren des Installationskastens in der Wandschalenöffnung durch einen einzigen Arbeitsschritt.

Vorzugsweise ist der Greifarm als Biegefeder oder als Blattfeder ausgestaltet.

Vorzugsweise umfasst die Befestigungsvorrichtung wenigstens ein Verschwenkungselement, wobei die zweite Seite einen dritten Auflageabschnitt umfasst, auf dem das Verschwenkungselement aufliegt, wobei das Verschwenkungselement mit dem Installationskasten zusammenwirkt, um eine Kraft auf den dritten Auflageabschnitt auszuüben.

Diese Ausgestaltung ermöglicht ein einfaches Verschwenken des Befestigungselements, um den Installationskasten in der Wandschalenöffnung festzulegen.

Vorzugsweise ist der dritte Auflageabschnitt durch eine gekrümmte Fläche, die in eine schiefe Ebene übergeht, die zum ersten Ende hin geneigt ist, gebildet.

In einer bevorzugten Ausgestaltung ist das Verschwenkungselement als Schraubelement ausgebildet, wobei das Schraubelement mit einem Gewinde des Installationskastens zusammenwirkt, um die Kraft auf den dritten Auflageabschnitt auszuüben, wobei vorzugsweise das Gewinde an der Innenseite des Installationskastens angeordnet ist.

Vorzugsweise ist ein Kopf des Schraubelements bei einem in der Wandschalenöffnung angeordneten Installationskasten einem Installateur zugänglich.

In einer bevorzugten Ausgestaltung ist das Schraubelement als handelsübliche Schraube ausgebildet.

Vorzugsweise verläuft das Schraubelement im Wesentlichen quer zum Kastenboden und/oder quer zur Wandschale.

Vorzugsweise umfasst das Befestigungselement wenigstens einen vierten Auflageabschnitt, der geeignet ist, benachbart zur Befestigungsöffnung an der Außenseite des Installationskastens aufzuliegen.

Vorzugsweise bildet der vierte Auflageabschnitt ein Auflager, das an der Außenseite des Installationskastens aufliegt, wenn der maximale Umfang der Verschwenkung des Befestigungselements erreicht ist.

In einer bevorzugten Ausgestaltung liegt der zweite Auflageabschnitt auf dem zweiten Auflagebereich auf, wenn der dritte Auflageabschnitt beabstandet von dem Verschwenkungselement angeornet ist.

In einer bevorzugten Ausgestaltung liegt der zweite Auflageabschnitt auf dem zweiten Auflagebereich auf, wenn der dritte Auflageabschnitt nicht mit dem Verschwenkungselement in Berührung ist.

Die Erfindung betrifft ferner einen Installationskasten, insbesondere einen Verteilerkasten, mit wenigstens einer Befestigungsöffnung, umfassend eine erfindungsgemäße Befestigungsvorrichtung.

Des Weiteren betrifft die Erfindung ein Verfahren zur Montage eines erfindungsgemäßen Installationskastens. Das Verfahren umfasst folgende Verfahrensschritte:
a) Bereitstellen eines erfindungsgemäßen Installationskastens,
b) Anordnen des Installationskastens in einer in eine Wandschale eingebrachten Wandschalenöffnung;
c) Bereitstellen einer erfindungsgemäßen Befestigungsvorrichtung;
d) Verbinden eines Befestigungselements der Befestigungsvorrichtung mittels zumindest teilweisen Hindurchführens des Befestigungselements von dem Innenraum in den Außenraum mit dem ersten Ende voran in einer parallel zum Kastenboden verlaufenden Richtung durch die Befestigungsöffnung, wobei das Befestigungselement derart mit dem Installationskasten zusammenwirkt, dass der Installationskasten in der Wandschalenöffnung festgelegt wird.

Diese Ausgestaltung ermöglicht eine einfache und sichere Befestigung bzw. Vorfixierung des Installationskastens in der Wandschalenöffnung.

Vorzugsweise erfolgt das Hindurchführen des Befestigungselements von dem Innenraum in den Außenraum durch die Befestigungsöffnung in Wesentlichen in einer parallel zu der Wandschale verlaufenden Richtung.

In einer bevorzugten Ausgestaltung übt ein Greifarm des Befestigungselements mittels eines Greifabschnitts eine Kraft auf eine Rückseite der Wandschale aus, um den Installationskasten in der Wandschalenöffnung fest zu legen.

Diese Ausgestaltung ermöglicht eine sichere Befestigung des Installationskastens in der Wandschalenöffnung.

Vorzugsweise ist der Greifarm als Federelement ausgebildet und die Kraft ist eine durch eine Verformung des Federelements bedingte Rückstellkraft.

Diese Ausgestaltung ermöglicht eine sichere Befestigung des Installationskastens in der Wandschalenöffnung in einem einzigen Arbeitsschritt.

Vorzugsweise wirkt das Befestigungselement mit dem Installationskasten zusammen, indem das Federelement an dem Greifabschnitt auf der Rückseite der Wandschale aufliegt, um die Kraft auf die Rückseite der Wandschale auszuüben, und indem jeweils der erste Auflageabschnitt auf einem ersten Auflagebereich und der zweite Auflageabschnitt auf einem zweiten Auflagebereich aufliegt, um einem Verschwenken des Greifarms und/oder des Federelements von der Rückseite weg entgegen zu wirken.

In einer bevorzugten Ausgestaltung wird das Befestigungselement mit dem Installationskasten verbunden, indem das Befestigungselement in eine Befestigungsöffnung des Installationskastens von einem Innenraum des Installationskastens zu einem Außenraum des Installationshastens zumindest teilweise hindurchgeführt wird, vorzugsweise bis der erste Auflageabschnitt auf dem ersten Auflagebereich und der zweite Auflageabschnitt auf dem zweiten Auflagebereich aufliegt.

In einer bevorzugten Ausgestaltung umfasst das Verfahren folgende weitere Verfahrensschritte:
e) Bereitstellen eines Verschwenkungselements;
f) Verbinden des Verschwenkungselements mit dem Installationskasten, wobei das Verschwenkungselement derart mit dem Installationskasten verbunden wird, dass das Verschwenkungselement auf einem dritten Auflageabschnitt des Befestigungselements aufliegt, um eine Kraft auf den dritten Auflageabschnitt auszuüben.

Durch diese Ausgestaltung wird ein einfaches Verschwenken des Befestigungselements ermöglicht, um eine sichere Befestigung des Installationskastens in der Wandschalenöffnung zu erreichen.

Vorzugsweise ist das Verschwenkungselement ein Schraubelement, wobei das Schraubelement mit einem Gewinde des Installationskastens durch eine Drehung des Schraubelements in das Gewinde verbunden wird, wobei die Drehung des Schraubelements eine translatorische Bewegung des Schraubelements bezüglich des Gewindes bewirkt, sodass die Kraft auf den dritten Auflageabschnitt ausgeübt wird.

Vorzugsweise erfolgt die Drehung um eine quer zum Kastenboden und/oder zur Wandschale verlaufenden Richtung.

Vorzugsweise wird das Befestigungselement derart in die Befestigungsöffnung eingeführt, dass ein Zubewegen des Greifabschnitts auf die Rückseite der Wandschale bewirkt wird.

Einzelheiten und weitere Vorteile der Befestigungsvorrichtung, des erfindungsgemäßen Installationskastens und des erfindungsgemäßen Verfahrens zur Montage eines erfindungsgemäßen Installationskastens werden anhand der nachfolgend beschriebenen Ausführungsbeispiele erläutert. Dabei veranschaulichen im Einzelnen:
Fig. 1 eine perspektivische Ansicht eines Befestigungselements einer Befestigungsvorrichtung eines erfindungsgemäßen Installationskastens nach einem ersten Ausführungsbeispiel;
Fig. 2 eine perspektivische Ansicht des Befestigungselements der Befestigungsvorrichtung nach dem ersten Ausführungsbeispiel;
Fig. 3 eine Querschnittsansicht eines Installationskastens;
Fig. 4 eine Querschnittsansicht des Installationskastens umfassend die Befestigungsvorrichtung nach dem ersten Ausführungsbeispiel;
Fig. 5 eine Draufsicht des Installationskastens aus Fig. 4;
Fig. 6 eine perspektivische Ansicht des Installationskastens und des Befestigungselements der Befestigungsvorrichtung nach dem ersten Ausführungsbeispiel;
Fig. 7 eine Querschnittsansicht des Installationskastens und des Befestigungselements der Befestigungsvorrichtung nach dem ersten Ausführungsbeispiel;
Fig. 8 eine perspektivische Ansicht des Installationskastens und des Befestigungselements der Befestigungsvorrichtung nach dem ersten Ausführungsbeispiel;
Fig. 9 eine Querschnittsansicht des Installationskastens und des Befestigungselements der Befestigungsvorrichtung nach dem ersten Ausführungsbeispiel;
Fig. 10 eine perspektivische Ansicht des Installationskastens und des Befestigungselements der Befestigungsvorrichtung nach dem ersten Ausführungsbeispiel;
Fig. 11 eine perspektivische Ansicht des Installationskastens und des Befestigungselements der Befestigungsvorrichtung nach dem ersten Ausführungsbeispiel;
Fig. 12 eine Querschnittsansicht des Installationskastens mit einem zu einer Rückseite einer Wandschale verschwenkten Befestigungselement der Befestigungsvorrichtung nach dem ersten Ausführungsbeispiel;
Fig. 13 eine perspektivische Ansicht des Installationskastens mit einem zu der Rückseite der Wandschale verschwenkten Befestigungselement der Befestigungsvorrichtung nach dem ersten Ausführungsbeispiel;
Fig. 14 eine perspektivische Ansicht des Installationskastens mit einem zu der Rückseite der Wandschale verschwenkten Befestigungselement der Befestigungsvorrichtung nach dem ersten Ausführungsbeispiel;
Fig. 15 eine Querschnittsansicht des in der Wandschalenöffnung angeordneten Installationskastens mit dem zu der Rückseite der Wandschale verschwenkten Befestigungselement der Befestigungsvorrichtung nach dem ersten Ausführungsbeispiel;
Fig. 16 eine Querschnittsansicht des in der Wandschalenöffnung angeordneten Installationskastens mit dem zu der Rückseite der Wandschale verschwenkten Befestigungselement der Befestigungsvorrichtung nach dem ersten Ausführungsbeispiel;
Fig. 17 eine perspektivische Ansicht eines Befestigungselements der erfindungsgemäßen Befestigungsvorrichtung nach einem zweiten Ausführungsbeispiel;
Fig. 18 eine perspektivische Ansicht des Befestigungselements der Befestigungsvorrichtung nach dem zweiten Ausführungsbeispiel;
Fig. 19 eine Querschnittsansicht des Installationskastens und des Befestigungselements der Befestigungsvorrichtung nach dem zweiten Ausführungsbeispiel;
Fig. 20 eine perspektivische Ansicht des Installationskastens und des Befestigungselements der Befestigungsvorrichtung nach dem zweiten Ausführungsbeispiel;
Fig. 21 eine Querschnittsansicht des Installationskastens mit dem zu der Rückseite der Wandschale verschwenkten Befestigungselement der Befestigungsvorrichtung nach dem zweiten Ausführungsbeispiel;
Fig. 22 eine Querschnittsansicht des Installationskastens und des Befestigungselements der Befestigungsvorrichtung nach dem zweiten Ausführungsbeispiel;
Fig. 23 eine perspektivische Ansicht des Installationskastens und des Befestigungselements der Befestigungsvorrichtung nach dem zweiten Ausführungsbeispiel;
Fig. 24 eine Querschnittsansicht des Installationskastens mit einem zu der Rückseite der Wandschale verschwenkten Befestigungselement der Befestigungsvorrichtung nach dem zweiten Ausführungsbeispiel;
Fig. 25 eine Querschnittsansicht des in der Wandschalenöffnung angeordneten Installationskastens mit dem zu der Rückseite der Wandschale verschwenkten Befestigungselement der Befestigungsvorrichtung nach dem zweiten Ausführungsbeispiel.

Die Erfindung betrifft eine Befestigungsvorrichtung 1 zur Befestigung eines Installationskastens 100, insbesondere eines Verteilerkastens 110, in einer in einer Wandschale 200 eingebrachten Wandschalenöffnung 210.

Die Befestigungsvorrichtung 1 umfasst wenigstens ein Befestigungselement 10. Gemäß den beiden Ausführungsbeispielen der Befestigungsvorrichtung 1 umfasst die Befestigungsvorrichtung 1 vier Befestigungselemente 10.

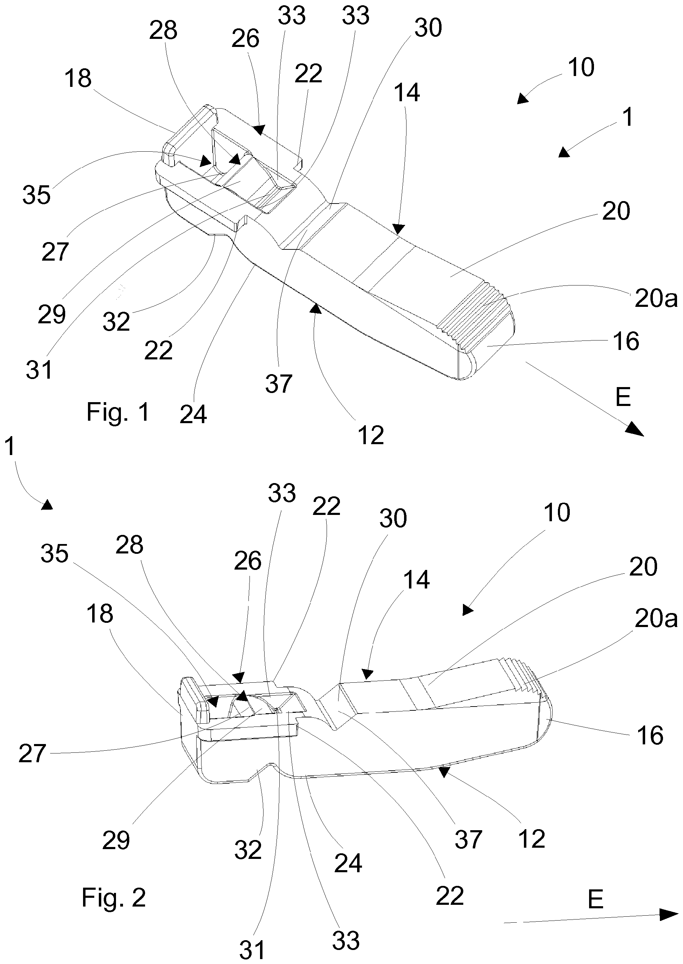

Wie insbesondere in den Fign. 1, 2, 17 und 18 zu erkennen ist, umfasst das Befestigungselement 10 eine erste Seite 12 und eine zweite Seite 14. Die erste Seite 12 ist in einer bestimmungsgemäßen Lage des Verteilerkastens 110 in der Wandschalenöffnung 210 einer Rückseite 220 der Wandschale 200 abgewandt und die zweite Seite 14 einer Rückseite 220 der Wandschale 200 zugewandt. Das Befestigungselement 10 umfasst einen Greifarm 20 mit einem ersten Ende 16 und einen Greifabschnitt 20a, der benachbart zu dem ersten Ende 16 an der zweiten Seite 14 angeordnet ist. Der Greifabschnitt 20a ist geeignet, an der Rückseite 220 anzugreifen.

Das Befestigungselement 10 umfasst benachbart zu einem zweiten Ende 18 einen Anschlag 22. Vorzugsweise ist der Anschlag 22 auf der zweiten Seite 14 des Befestigungselement 10 angeordnet.

Das Befestigungselement 10 erstreckt sich im Wesentlichen entlang einer Erstreckungsrichtung E. Der Anschlag 22 ist vorzugsweise durch einen Vorsprung gebildet, der quer zu Erstreckungsrichtung E vorspringt.
Die erste Seite 12 umfasst einen ersten Auflageabschnitt 24. Die zweite Seite 14 umfasst einen zweiten Auflageabschnitt 26. Die Zweite Seite 14 umfasst zudem einen dritten Auflageabschnitt 28 und einen vierten Auflageabschnitt 30. Die erste Seite 12 kann ferner einen fünften Auflageabschnitt 32 umfassten

Der dritte Auflageabschnitt 28 ist durch eine gekrümmte Fläche 27 gebildet, die in eine schiefe Ebene 29 übergeht, die bezüglich der Erstreckungsrichtung E zu einem ersten Ende 16 des Befestigungselements 10 hin geneigt ist. Die schiefe Ebene 29 mündet in eine Vertiefung 31, wobei vorzugsweise die schiefe Ebene 29 und die Vertiefung 31 seitlich durch wenigstens eine Wandung 33 begrenzt sind, wobei sich die Wandung 33 vorzugsweise parallel zur Erstreckungsrichtung E erstreckt. Das Befestigungselement 10 umfasst ferner eine Mulde 35, die benachbart zu dem zweiten Ende 18 des Befestigungselements 10 angeordnet ist. Die Mulde 35 dient zum Entfernen des Befestigungselements aus der Befestigungsöffnung 140 des Verteilerkastens 110 mittels eines Werkzeugs, beispielsweise eines Schraubendrehers.

Wie insbesondere die Fig. 2 zu erkennen gibt, ist die vierte Auflagefläche 30 durch eine bezüglich der Erstreckungsrichtung E windschiefe Ebene 37 gebildet, die in Richtung des zweiten Endes 18 geneigt ist.

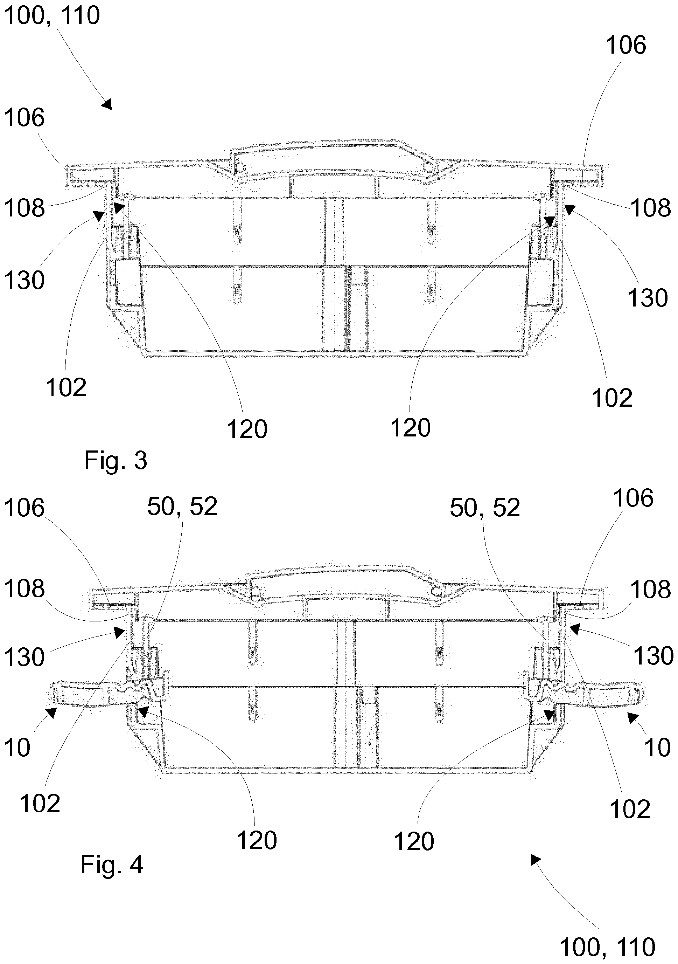

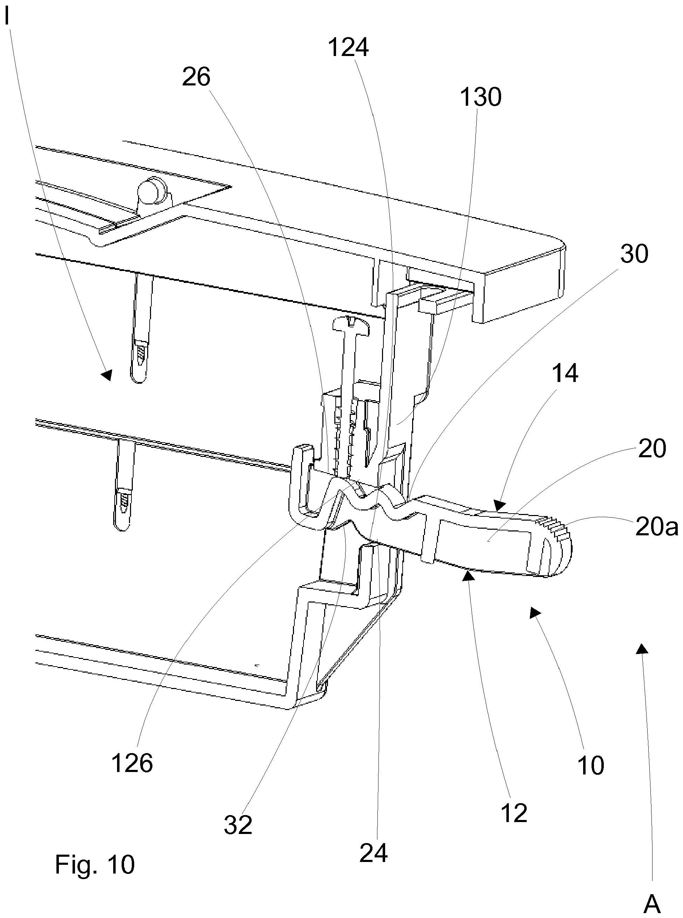

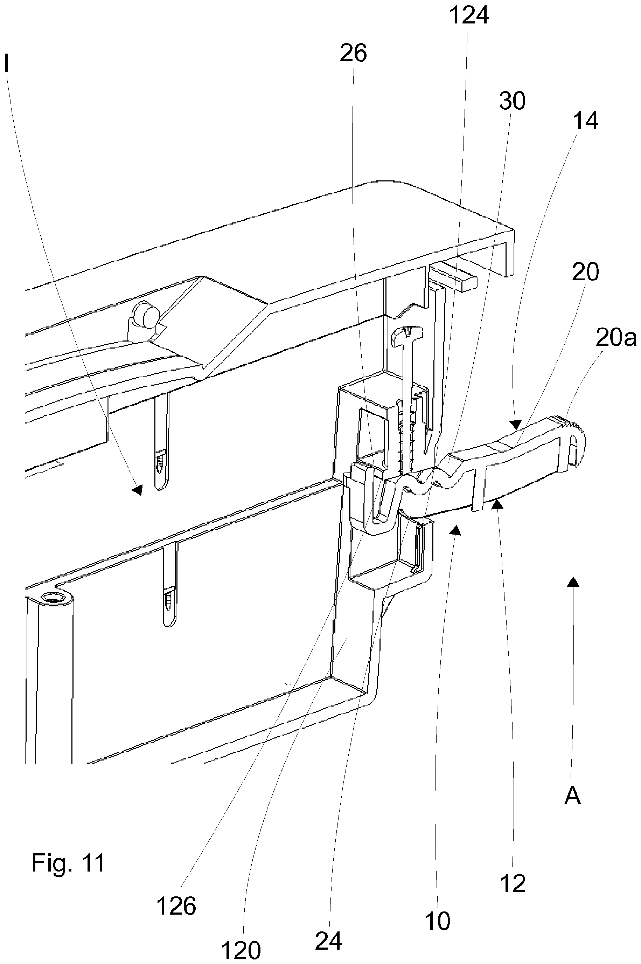

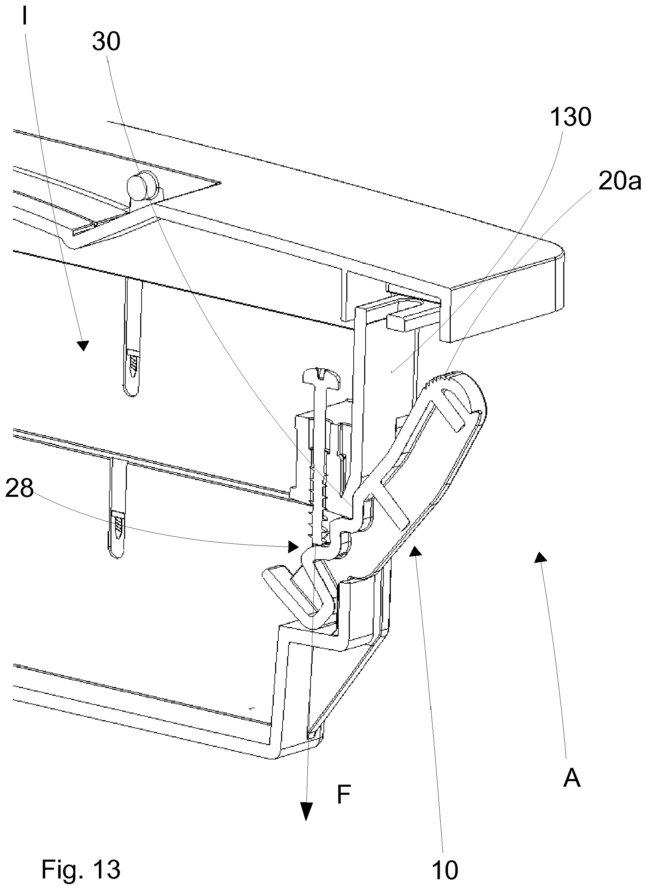

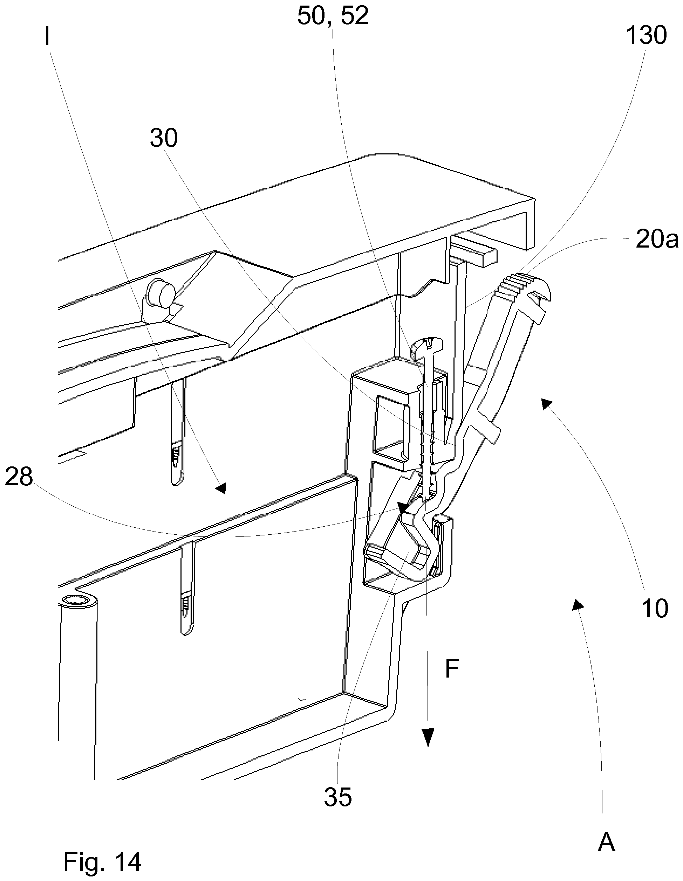

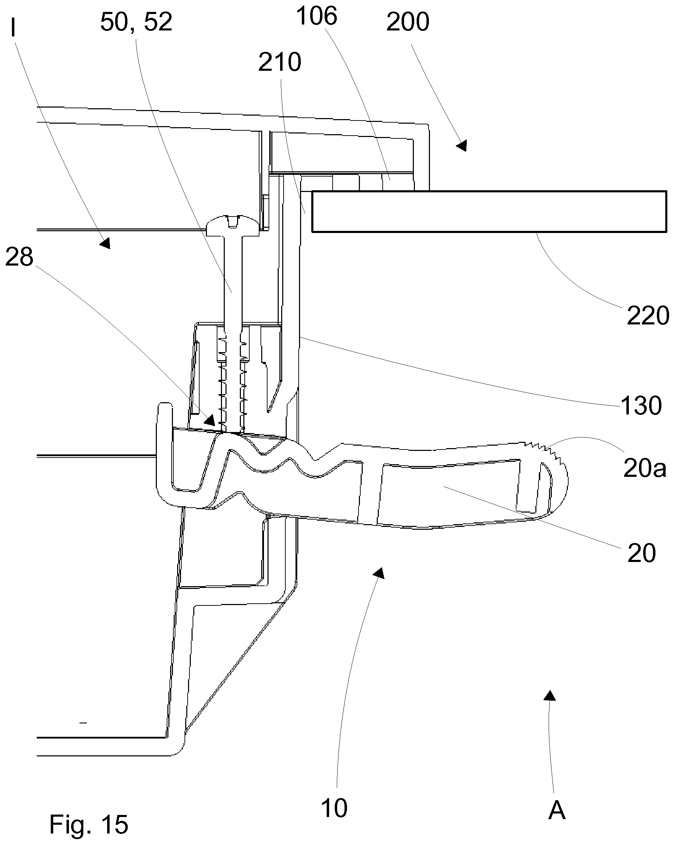

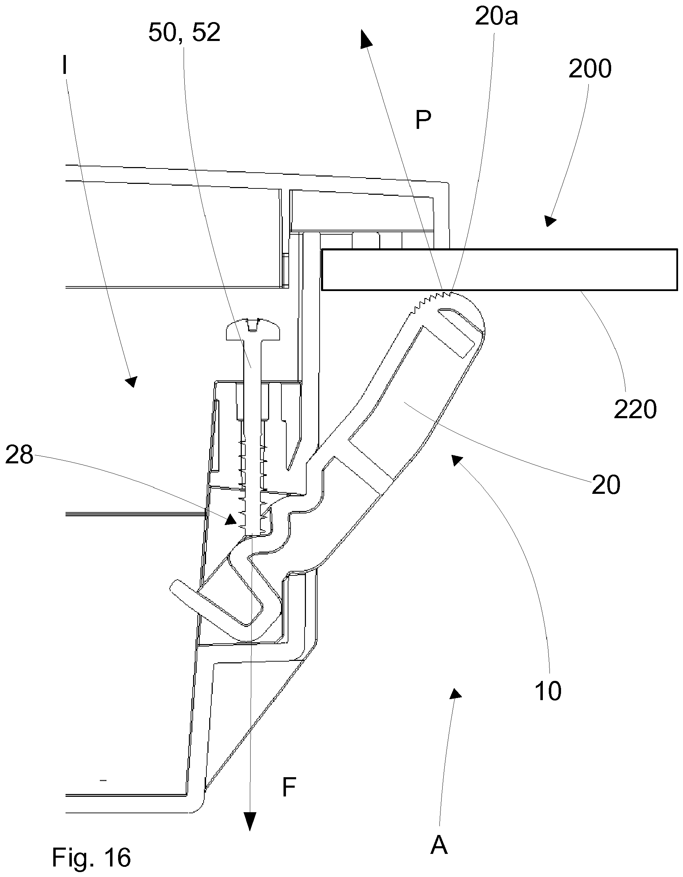

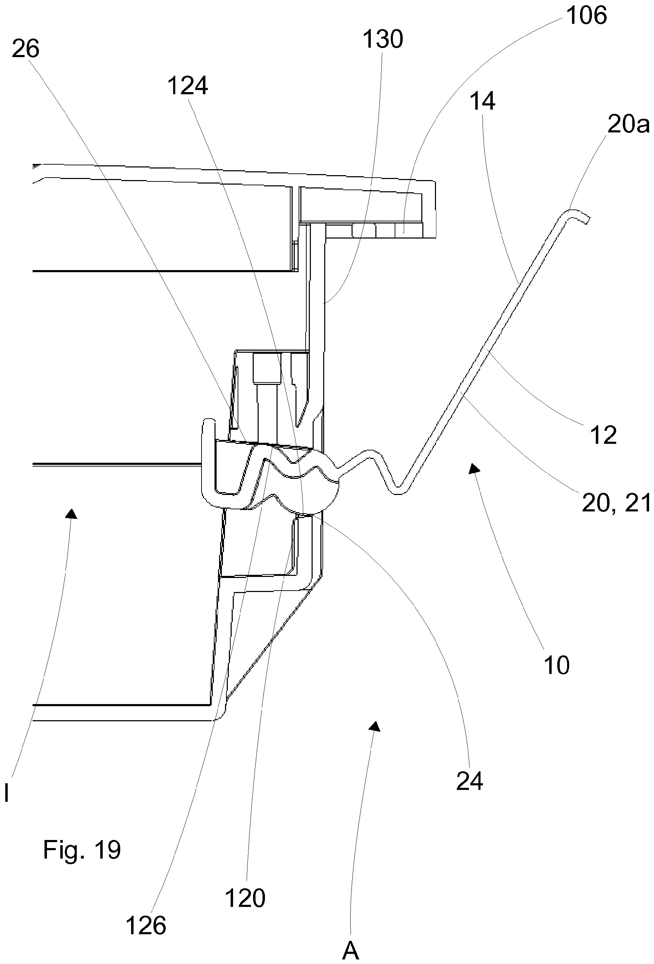

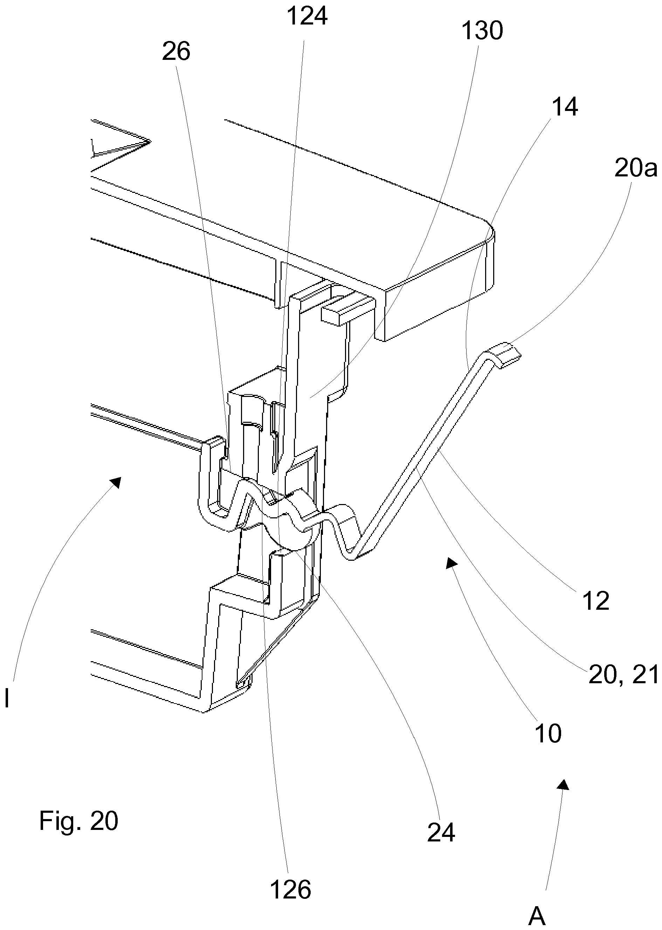

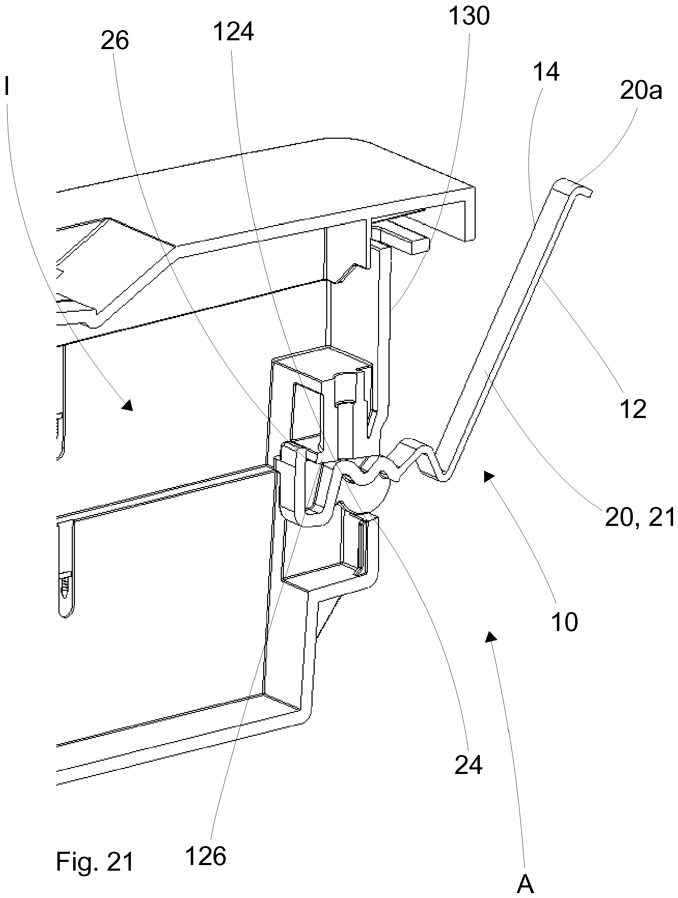

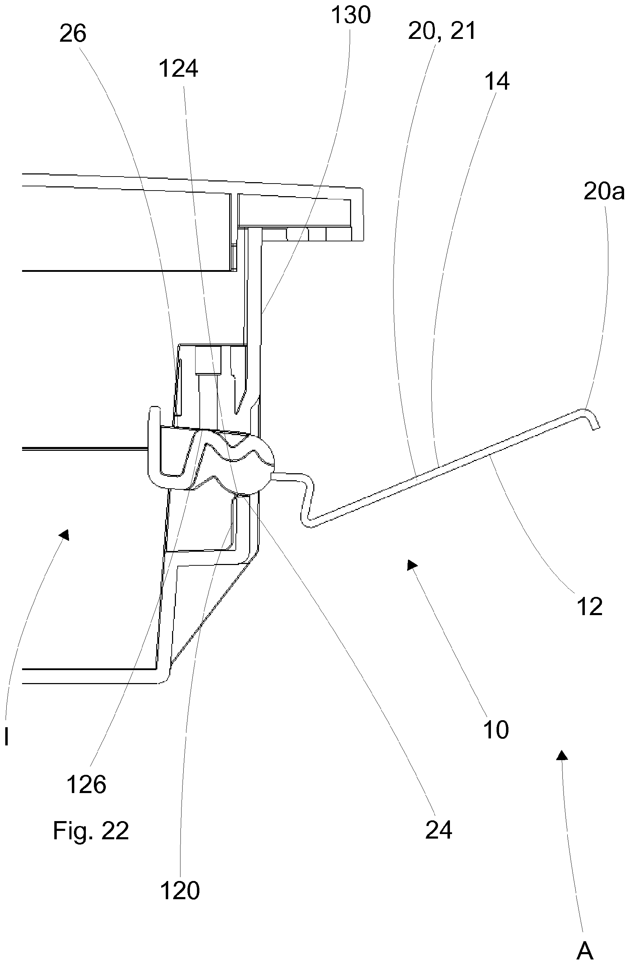

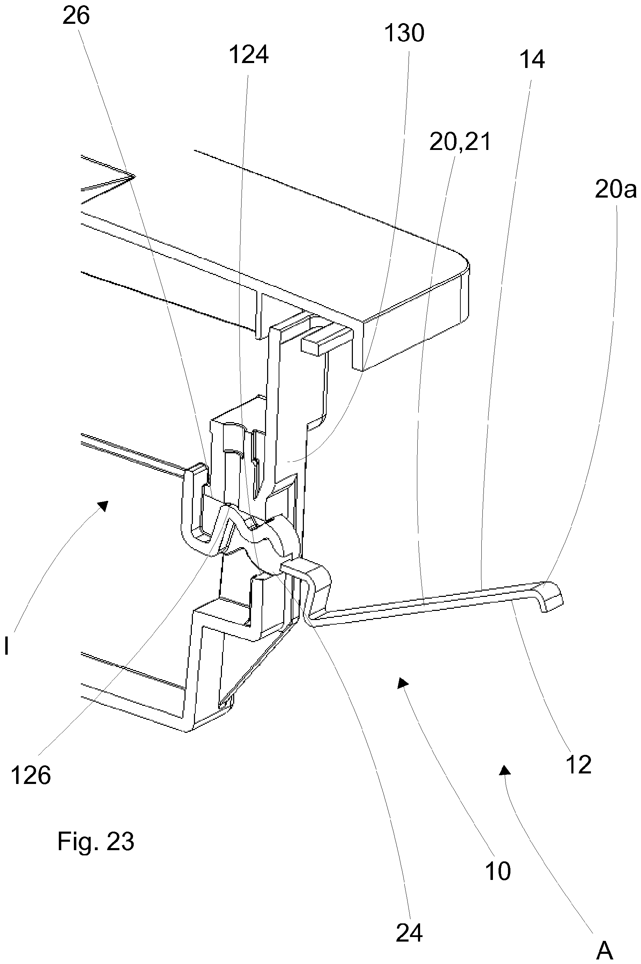

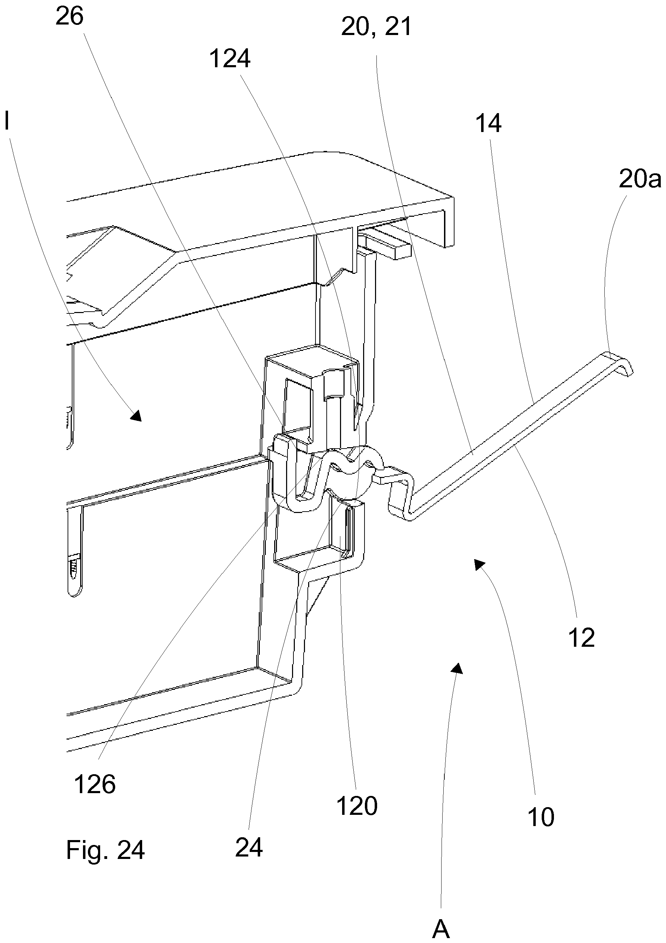

Die Fign. 3 bis 16 und 19 bis 25 zeigen einen Installationskasten 100, der in der Form eines Verteilerkastens 110 ausgebildet ist. Der Installationskastens 100 umfasst einen Innenraum I und einen Außenraum A. Der Innenraum I ist vom Außenraum A durch wenigstens eine Wand 102 getrennt. Der Installationskasten 100 umfasst einen Innenseite 120, die entlang der Wand 102 im Innenraum I verläuft und eine Außenseite 130, die entlang der Wand 102 an dem Außenraum A verläuft. Der Installationskasten 100 umfasst wenigstens eine Befestigungsöffnung 140, wobei das Befestigungselement 10 zumindest teilweise durch die Befestigungsöffnung 140 von dem Innenraum I zu dem Außenraum A hindurchsteckbar ist, um den Greifabschnitt 20a des Befestigungselements 10 mit der Rückseite 220 der Wandschale 200 in Berührung zu bringen. Der Installationskasten 100 umfasst ferner einen Boden 114 und vier Ecken 112. Der Installationskasten 100 umfasst einen Randabschnitt 106, der um einen Öffnungsrand 108 des Installationskastens 100 gebildet ist und der in der bestimmungsgemäßen Lage des Installationskastens 100 in der Wandschalenöffnung 210 auf einer Vorderseite der Wandschale 200 anliegt.

Vorzugsweise ist die Befestigungsöffnung 140 annähernd rechteckförmig ausgebildet.

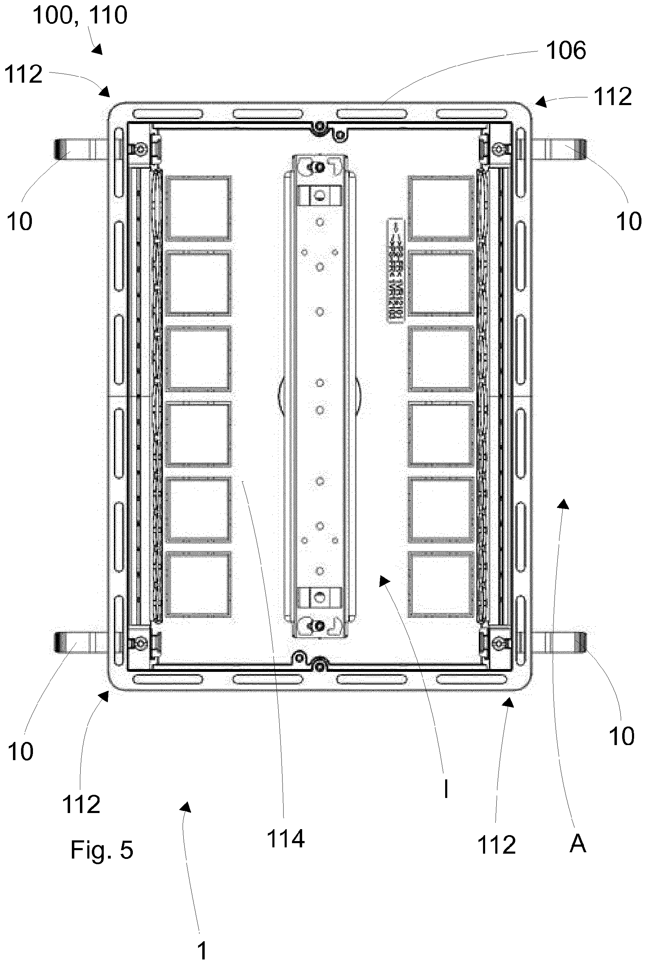

Wie insbesondere Fig. 5 zu erkennen gibt, umfasst der Installationskasten 100 in einer bevorzugten Ausgestaltung vier Befestigungsöffnungen 140, die jeweils benachbart zu den Ecken 112 des Installationskastens 100 angeordnet sind.

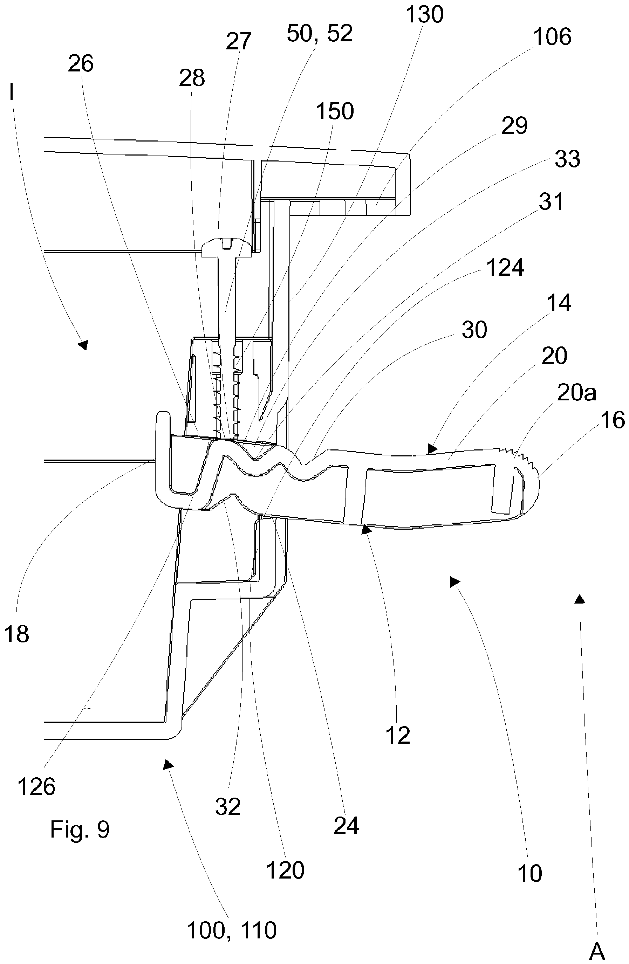

Wie insbesondere die Fign. 9 bis 16 und 19 bis 25 veranschaulichen, umfasst der Installationskasten 100 benachbart zur Befestigungsöffnung 140 an der Innenseite 120 wenigstens einen Anschlagabschnitt 122, wobei der Anschlag 22 des Befestigungselements 10 derart ausgestaltet ist, dass nach dem teilweise Hindurchführen des Befestigungselements 10 durch die Befestigungsöffnung 140 der Anschlag 22 dem Anschlagabschnitt 122 gegenüberliegt, vorzugsweise an dem Anschlagabschnitt 122 anliegt. Somit verhindert der Anschlag 22 im zusammenwirken mit dem Anschlagabschnitt 122, dass das Befestigungselement 10 vollständig durch die Befestigungsöffnung 140 vom Innenraum I zum Außenraum A Hindurchgeführt werden kann. Dabei entsteht zwischen dem Anschlag 22 und dem Anschlagabschnitt 122 ein Formschluss, der den Anschlag 22 und/oder das zweite Ende 18 des Befestigungselements 10 in Innenraum I hält.

Der Installationskasten 100 umfasst ferner benachbart zur Befestigungsöffnung 140 einen ersten Auflagebereich 124, der geeignet ist, im Zusammenwirken mit dem ersten Auflageabschnitt 24 einen Angelpunkt zu bilden. Dabei bildet das Befestigungselement 10 einen Hebel, der einen ersten Hebelarm aufweist, der durch den Greifarm 20 gebildet ist. Der Greifarm 20 erstreckt sich dabei zwischen dem ersten Auflageabschnitt 24 und dem ersten Ende 16. Der Installationskasten 100 umfasst ferner benachbart zur Befestigungsöffnung 140 einen zweiten Auflagebereich 126, der mit dem zweiten Auflageabschnitt 26 des Befestigungselements 10 in Berührung bringbar ist, um einer Schwenkbewegung des ersten Hebels von der Rückseite 120 der Wandschale 200 weg entgegen zu wirken. Das Zusammenwirken des zweiten Auflageabschnitts 26 mit dem zweiten Auflagebereich 126 ist insbesondere aus den Fign. 9 bis 11, 15 und 19 bis 25 ersichtlich.

Der erste Auflagebereich 124 kann durch eine Kante der Befestigungsöffnung 140 gebildet sein. Ferner kann der erste Auflagebereich 124 durch eine untere Kante der Befestigungsöffnung 140, die einen Rand der Befestigungsöffnung 140 begrenzt, der dem Kastenboden 114 am nächsten angeordnet ist, gebildet sein.

Der zweite Auflagebereich 126 kann durch eine Fläche gebildet sein, die annähernd parallel zum Kastenboden 114 verläuft und/oder in der Richtung R auf den Kastenboden 114 zuläuft.

Die Fläche, die den zweiten Auflagebereich 124 bildet, kann in der Richtung R in eine obere Kante der Befestigungsöffnung 140 übergehen, wobei die obere Kante vorzugsweise der unteren Kante gegenüberliegt.

Gemäß dem ersten Ausführungsbeispiel, das in den Fign. 1 bis 16 wiedergegeben ist, umfasst die Befestigungsvorrichtung 1 wenigstens ein Verschwenkungselement 50, das als Schraubelement 52 ausgebildet ist. Das Schraubelement 52 kann eine handelsübliche Schraube sein. Das Schraubelement 52 ist geeignet, in ein Gewinde 150 des Installationskastens 100 eingeschraubt zu werden. In seiner bestimmungsgemäßen Lage liegt das Schraubelement 52 auf dem dritten Auflageabschnitt 28 auf, um eine Kraft F auf den dritten Auflageabschnitt 28 auszuüben. Durch die Ausübung der Kraft F wird das Befestigungselement 10 derart verschwenkt, dass der Greifabschnitt 20a mit der Rückseite 220 in Eingriff gebracht wird und eine Haltekraft auf die Rückseite 220 der Wandschale 200 ausgeübt wird. Die Kraft F verhindert in Verbindung mit dem ersten Auflageabschnitt 24 und dem ersten Auflagebereich 124 zudem ein Verschwenken des Greifarms 20 von der Rückseite 220 weg.

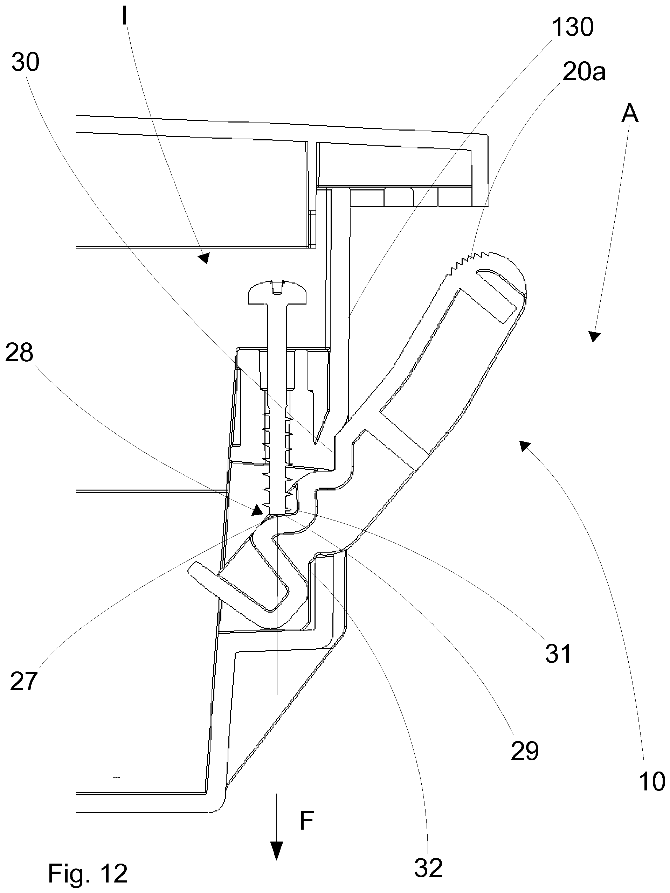

Wie insbesondere Fig. 12 zu erkennen gibt, dient der vierte Auflageabschnitt 30 dazu, benachbart zur Befestigungsöffnung 140 an der Außenseite 130 des Installationskastens 100 aufzuliegen. Der fünfte Auflageabschnitt 32 dient dazu, benachbart zur Befestigungsöffnung 140 an der Innenseite 120 des Installationskastens 100 aufzuliegen. Gemäß dieser Ausgestaltung bildet der vierte Auflageabschnitt 30 und der fünfte Auflageabschnitt 32 ein Auflager, das ein Verschwenken des Befestigungselements 10 über eine vorgesehene maximale Verschwenkungsposition hinaus verhindert.

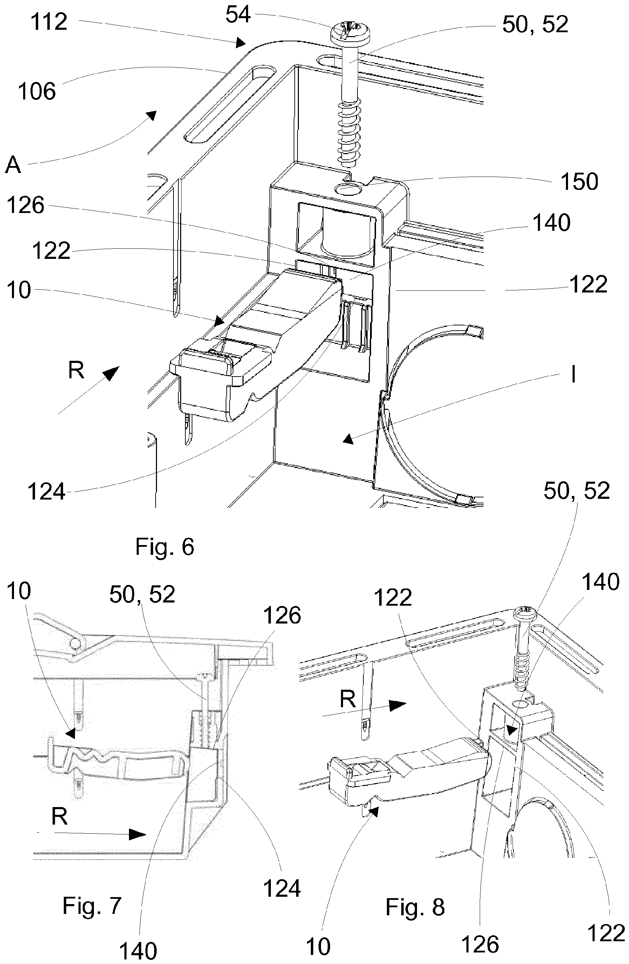

Die Fign. 6 bis 8 veranschaulichen, wie das Befestigungselement 10 zumindest teilweise durch die Befestigungsöffnung 140 von Innenraum I zum Außenraum A hindurchgeführt wird, um den Greifabschnitt 20a mit der Rückseite 220 der Wandschale 200 in Berührung zu bringen. Dabei wird das Befestigungselement 10 mit dem ersten Ende 16 voran in einer parallel zum Kastenboden 114 verlaufenden Richtung R durch die Befestigungsöffnung 140 geführt. Dabei kann der erste Auflagebereich 124 und der zweite Auflagebereich 126 derart ausgebildet sein, dass das Hindurchführen des Befestigungselements 10 in der Richtung R ein Zubewegen des Greifabschnitts 20a auf die Rückseite 220 der Wandschale 200 bewirkt. Demgemäß wird das Befestigungselement 10 derart in die Befestigungsöffnung 140 eingeführt, dass ein Zubewegen des Greifabschnitts 20a auf die Rückseite 220 der Wandschale 200 bewirkt wird. Dadurch wird in einfacher Weise der Installationskasten 100 in der Wandschalenöffnung 210 fixiert bzw. vorfixiert. Um die Fixierung des Installationskastens 100 in der Wandschalenöffnung 210 weiter zu verstärken, kann, nach bedarf, das Befestigungselement 10 mittels des Schraubelements 52 derart verschwenkt werden, dass die auf den zweiten Auflageabschnitt 28 ausgeübte Kraft F und daraus resultierend die durch den Greifabschnitt 20a auf die Rückseite 220 ausgeübte Haltekraft P verstärkt wird. Die Kraft F wird auf den dritten Auflageabschnitt 28 ausgeübt in dem das Schraubelement 52 in das Gewinde 150 gedreht wird, um das Schraubelement 52 in eine quer zum Kastenboden 114 verlaufende translatorische Bewegung zu überführen. Dabei kann das Schraubelement 52 entlang des dritten Auflageabschnitts 28 von der gekrümmten Fläche 27 zu der schiefen Ebene 29 wandern.

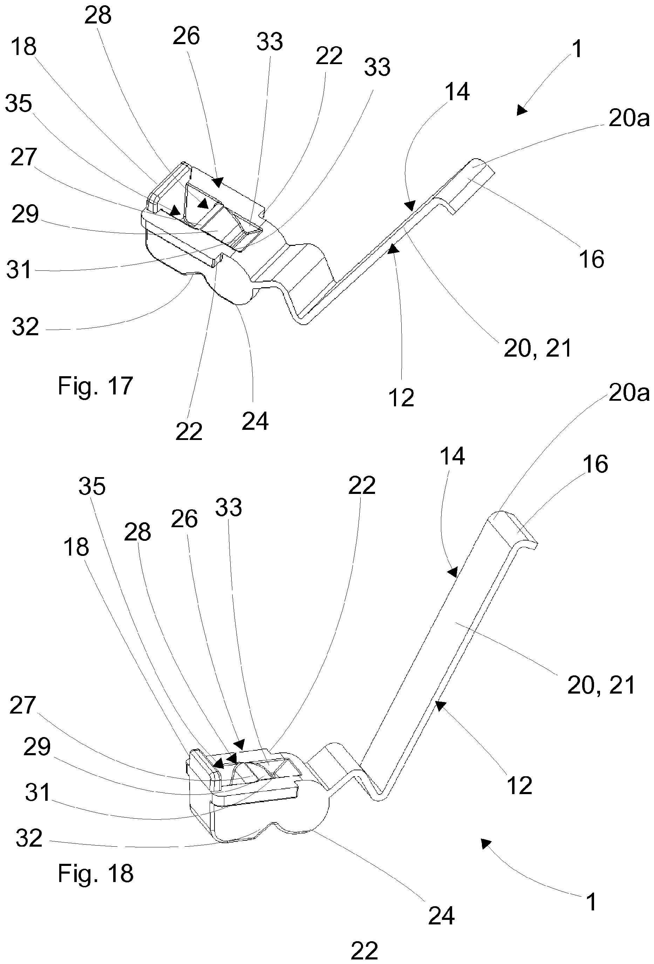

Die Fign. 17 bis 25 geben die Befestigungsvorrichtung 1 in dem zweiten Ausführungsbeispiel wieder. Die Befestigungsvorrichtung 1 gemäß dem zweiten Ausführungsbeispiel ist im Wesentlichen durch wenigstens ein Befestigungselement 10 gebildet, dass in den Fign. 17 und 18 wiedergegeben ist. Die Befestigungsvorrichtung 1 ist gemäß diesem Ausführungsbeispiel durch vier Befestigungselemente 10 gebildet.

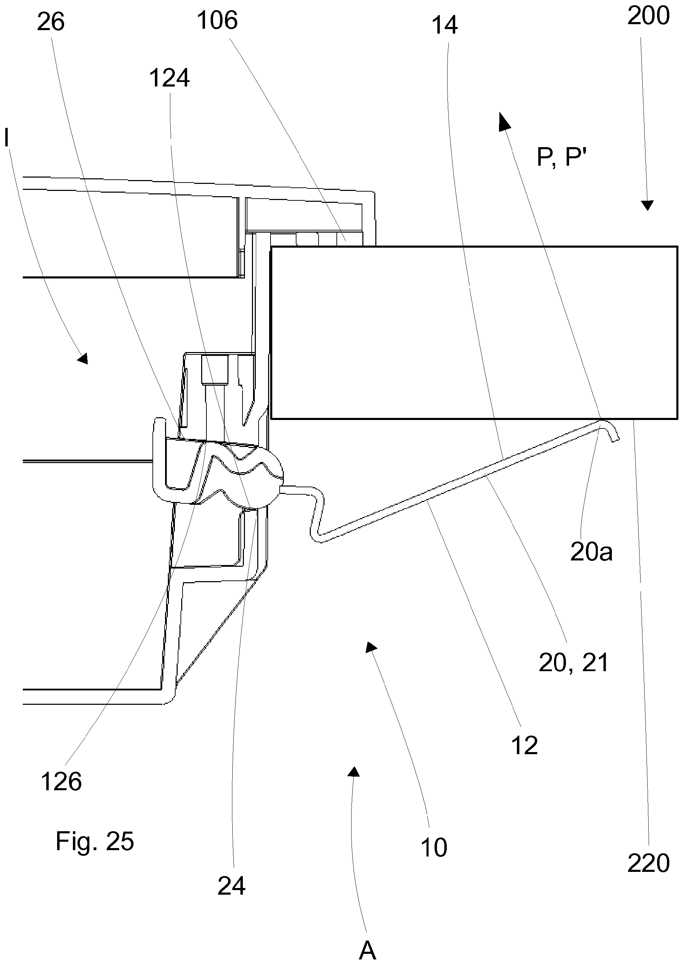

Das Befestigungselement 10 der Befestigungsvorrichtung 1 nach dem zweiten Ausführungsbeispiel umfasst einen Greifarm 20, der im Wesentlichen durch ein Federelement 21 gebildet ist. Das Federelement 21 kann in Form einer Biegefeder oder einer Blattfeder ausgebildet sein. Der Greifarm 20 ist gemäß dem zweiten Ausführungsbeispiel gegenüber einem Teilstück des Befestigungselements 10, das zwischen dem ersten Auflageabschnitt 24 und dem zweiten Ende 18 verläuft, in seiner Bestimmungslage zur Rückseite 220 hin geneigt. Während einer ersten Phase des zumindest teilweisen Hindurchführens des Befestigungselements 10 durch die Befestigungsöffnung 140 liegt das Federelement 21 an seinem Greifabschnitt 20a an der Rückseite 220 an. Wie insbesondere die Fig. 25 zeigt, ist die Haltekraft P, die den Installationskasten 100 in den Wandschalenöffnung 210 hält, eine durch eine Verformung des Federelements 21 bedingte Rückstellkraft P'. Eine zweite Phase des teilweisen Hindurchführens des Befestigungselements 10 durch die Befestigungsöffnung 140 überführt das Befestigungselement 10 in seine in Fig. 25 wiedergegebene bestimmungsgemäße Lage, bei welcher der erste Auflageabschnitt 24 an dem ersten Auflagebereich 124 und der zweite Auflageabschnitt 26 an dem zweiten Auflagebereich 126 aufliegt. Während der zweiten Phase wird die Haltekraft P kontinuierlich erhöht, indem das Federelement 21 verformt wird. Während der Greifabschnitt 20a an der Rückseite 220 der Wandschale 200 anliegt, bildet das Federelement 21 zwischen dem ersten Auflageabschnitt 24 und dem Greifabschnitt 20a einen Lastarm eines Hebels. In der bestimmungsgemäßen Lage bildet das Teilstück, das zwischen dem ersten Auflageabschnitt 24 und dem zweiten Ende 18 verläuft, einem Hebelarm, der verhindert, dass das Befestigungselement 10 um den ersten Auflageabschnitt 24 herum derart gedreht wird, dass der Greifarm 20 von der Rückseite 220 abgerückt wird.

Die Ausgestaltung des Befestigungselements 10 nach dem zweiten Ausführungsbeispiel ermöglicht eine schnelle Fixierung des Installationskastens 100 in der Wandschale 210 in dem das Befestigungselement durch die Befestigungsöffnung 140 vom Innenraum I in den Außenraum A teilweise hindurchgeführt wird, bis der Anschlag 22 an dem Anschlagabschnitt 122 anliegt. Dieser Schritt wird für jedes der vier Befestigungselemente 10 wiederholt. Weitere Schritte darüber hinaus sind nicht erforderlich.

Vorzugsweise ist der Installationskasten 100 sowie jedes Befestigungselement 10 aus Kunststoff gefertigt.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Installationskasten, insbesondere Verteilerkasten, mit wenigstens einer Befestigungsöffnung (140), umfassend eine Befestigungsvorrichtung (1), mittels welcher der Installationskasten (100) in einer in eine Wandschale (200) eingebrachten Wandschalenöffnung (210) befestigt werden kann, wobei die Befestigungsvorrichtung (1) ferner wenigstens ein Befestigungselement (10) mit einer einer Rückseite (220) der Wandschale (200) abwendbaren ersten Seite (12) und einer der Rückseite (220) der Wandschale (200) zuwendbaren zweiten Seite (14) umfasst,
wobei das Befestigungselement (10) einen Greifarm (20) mit einem ersten Ende (16) und einem Greifabschnitt (20a), der benachbart zu dem ersten Ende (16) an der zweiten Seite (14) angeordnet ist, umfasst, wobei der Greifabschnitt (20a) geeignet ist, an der Rückseite (220) anzugreifen,
wobei der Installationskasten (100) eine einem Innenraum (I) zugewandte Innenseite (120), eine einem Außenraum (A) zugewandte Außenseite (130), einen Kastenboden (114) und die wenigstens eine Befestigungsöffnung (140) aufweist,
wobei das Befestigungselement (10) zumindest teilweise durch die Befestigungsöffnung (140) mit dem ersten Ende (16) voran in einer parallel zum Kastenboden (114) verlaufenden Richtung (R) vom Innenraum (I) zum Außenraum (A) hindurchgeführt ist, um den Greifabschnitt (20a) mit der Rückseite (220) der Wandschale (200) in Berührung zu bringen,
wobei die erste Seite (12) einen ersten Auflageabschnitt (24) umfasst, der auf einem benachbart zur Befestigungsöffnung (140) angeordneten ersten Auflagebereich (124) des Installationskastens (100) aufliegt, um einen Angelpunkt zu bilden, und
wobei die zweite Seite (14) einen zweiten Auflageabschnitt (26) umfasst, der auf einem benachbart zur Befestigungsöffnung (140) angeordneten zweiten Auflagebereich (126) des Installationskastens (100) aufliegt, um einer Schwenkbewegung des Greifarms (20) von der Rückseite (220) weg entgegen zu wirken.

2. Installationskasten nach Anspruch 1, **dadurch gekennzeichnet, dass**
das Befestigungselement (10) benachbart zu einem zweiten Ende (18) einen Anschlag (22) aufweist,
wobei der Installationskasten (100) benachbart zur Befestigungsöffnung (140) an der Innenseite (120) wenigstens einen Anschlagabschnitt (122) umfasst und
wobei der Anschlag (22) derart ausgestaltet ist, dass nach dem teilweisen Hindurchführen des Befestigungselements (10) durch die Befestigungsöffnung (140) der Anschlag (22) dem Anschlagabschnitt (122) gegenüber liegt, vorzugsweise an dem Anschlagabschnitt (122) anliegt.

3. Installationskasten nach Anspruch 2, **dadurch gekennzeichnet, dass** der Anschlag (22) das Befestigungselement (10) derart mit dem Installationskasten (100) verbindet, dass der Anschlag (22) und/oder das zweite Ende (18) bei dem zumindest teilweise Hindurchführen des Befestigungselements (10) durch die Befestigungsöffnung (140) formschlüssig im Innenraum (I) gehalten ist.

4. Installationskasten nach einem der Ansprüche 1 bis 3, **dadurch gekennzeichnet, dass** der Greifarm (20) als Federelement (21) ausgebildet ist.

5. Installationskasten nach einem der Ansprüche 1 bis 4, **dadurch gekennzeichnet, dass** das die Befestigungsvorrichtung (1) wenigstens ein Verschwenkungselement (50) umfasst, wobei die zweite Seite (14) einen dritten Auflageabschnitt (28) umfasst, auf dem das Verschwenkungselement (50) aufliegt, wobei das Verschwenkungselement (50) mit dem Installationskasten (100) zusammenwirkt, um eine Kraft (F) auf den dritten Auflageabschnitt (28) auszuüben.

6. Installationskasten nach Anspruch 5, **dadurch gekennzeichnet, dass** Verschwenkungselement (50) als Schraubelement (52) ausgebildet ist, wobei das Schraubelement (52) mit einem Gewinde (150) des Installationskastens (100) zusammenwirkt, um die Kraft (F) auf den dritten Auflageabschnitt (28) auszuüben, wobei vorzugsweise das Gewinde (150) an der Innenseite (120) des Installationskastens (100) angeordnet ist.

7. Installationskasten nach einem der Ansprüche 1 bis 6, **dadurch gekennzeichnet, dass** das Befestigungselement (10) wenigstens einen vierten Auflageabschnitt (30) umfasst, der benachbart zur Befestigungsöffnung (140) an der Außenseite (130) des Installationskastens (100) aufliegt.

8. Verfahren zur Montage eines Installationskastens (100) nach einem der Ansprüche 1 bis 7, **gekennzeichnet durch** folgende Verfahrensschritte:
a) Bereitstellen des Installationskastens (100);
b) Anordnen des Installationskastens (100) in einer in eine Wandschale (200) eingebrachten Wandschalenöffnung (210);
c) Bereitstellen der Befestigungsvorrichtung (1);
d) Verbinden des Befestigungselements (10) der Befestigungsvorrichtung (1) mittels zumindest teilweisen Hindurchführens des Befestigungselements (10) von dem Innenraum (I) in den Außenraum (A) mit dem ersten Ende (16) voran in einer parallel zum Kastenboden (114) verlaufenden Richtung (R) durch die Befestigungsöffnung (140), wobei das Befestigungselement (10) derart mit dem Installationskasten (100) zusammenwirkt, dass der Installationskasten (100) in der Wandschalenöffnung (210) festgelegt wird.

9. Verfahren nach Anspruch 8, **dadurch gekennzeichnet, dass** ein einen Greifabschnitt (20a) umfassender Greifarm (20) des Befestigungselements (10) eine Haltekraft (P) auf eine Rückseite (220) der Wandschale (200) ausübt, um den Installationskasten (100) in der Wandschalenöffnung (210) fest zu legen.

10. Verfahren nach Anspruch 9, **dadurch gekennzeichnet, dass** der Greifarm (20) als Federelement (21) ausgebildet ist und die Haltekraft (P) eine durch eine Verformung des Federelements (21) bedingte Rückstellkraft (P') ist.

11. Verfahren nach einem der Ansprüche 8 bis 10, **gekennzeichnet durch** folgende weitere Verfahrensschritte:
e) Bereitstellen eines Verschwenkungselements (50);
f) Verbinden des Verschwenkungselements (50) mit dem Installationskasten (100), wobei das Verschwenkungselement (50) derart mit dem Installationskasten (100) verbunden wird, dass das Verschwenkungselement (50) auf einem dritten Auflageabschnitt (28) des Befestigungselements (10) aufliegt, um eine Kraft (F) auf den dritten Auflageabschnitt (28) auszuüben.

12. Verfahren nach Anspruch 11, **dadurch gekennzeichnet, dass** das Verschwenkungselement (50) ein Schraubelement (52) ist, wobei das Schraubelement (52) mit einem Gewinde (150) des Installationskastens (100) durch eine Drehung des Schraubelements (52) in das Gewinde (150) verbunden wird, wobei die Drehung des Schraubelements (52) eine translatorische Bewegung des Schraubelements (52) bezüglich des Gewindes (150) bewirkt, sodass die Kraft (F) auf den dritten Auflageabschnitt (28) ausgeübt wird.

## Claims

1. An installation cabinet, especially a distribution box, with at least one fastening opening (140), comprising a fastening device (1), by means of which the installation cabinet (100) can be fastened in a wall shell opening (210) built into a wall shell (200),
wherein the fastening device (1) further comprises at least one fastening element (10) having a first side (12), able to be faced away from a rear side (220) of the wall shell (200), and a second side (14), able to be faced towards the rear side (220) of the wall shell (200),
wherein the fastening element (10) comprises a gripping arm (20) having a first end (16) and a gripping portion (20a) which is arranged adjacent to the first end (16) on the second side (14),
wherein the gripping portion (20a) is suitable to engage on the rear side (220),
wherein the installation cabinet (100) has an inner side (120) facing an interior space (I), an outer side (130) facing an exterior space (A), a cabinet base (114) and the at least one fastening opening (140),
wherein the fastening element (10) is guided at least partially through the fastening opening (140) from the interior space (I) to the exterior space (A) with the first end (16) located in front, in a direction (R) running parallel to the cabinet base (114) in order to bring the gripping portion (20a) into contact with the rear side (220) of the wall shell (200),
wherein the first side (12) comprises a first bearing portion (24) which rests on a first bearing region (124), arranged adjacent to the fastening opening (140), of the installation cabinet (100), in order to form a hinge point, and
wherein the second side (14) comprises a second bearing portion (26) which rests on a second bearing region (126), arranged adjacent to the fastening opening (140) of the installation cabinet (100), in order to counteract a pivoting movement of the gripping arm (20) away from the rear side (220).

2. The installation cabinet according to Claim 1, **characterized in that** the fastening element (10) has a stop (22) adjacent to a second end (18),
wherein the installation cabinet (100) comprises at least one stop portion (122) on the inner side (120), adjacent to the fastening opening (140), and
wherein the stop (22) is configured such that, after the fastening element (10) has been partially guided through the fastening opening (140), the stop (22) lies opposite the stop portion (122), and preferably lies against the stop portion (122).

3. The installation cabinet according to Claim 2, **characterized in that** the stop (22) connects the fastening element (10) to the installation cabinet (100) such that the stop (22) and/or the second end (18) is held in a form-fitting manner in the interior space (I) when the fastening element (10) is guided at least partially through the fastening opening (140).

4. The installation cabinet according to one of Claims 1 to 3, **characterized in that** the gripping arm (20) is configured as a spring element (21).

5. The installation cabinet according to one of Claims 1 to 4, **characterized in that** the fastening device (1) comprises at least one pivoting element (50), wherein the second side (14) comprises a third bearing portion (28) on which the pivoting element (50) rests, wherein the pivoting element (50) cooperates with the installation cabinet (100) in order to exert a force (F) onto the third bearing portion (28).

6. The installation cabinet according to Claim 5, **characterized in that** the pivoting element (50) is configured as a screw element (52), wherein the screw element (52) cooperates with a thread (150) of the installation cabinet (100) in order to exert the force (F) onto the third bearing portion (28), wherein preferably the thread (150) is arranged on the inner side (120) of the installation cabinet (100).

7. The installation cabinet according to one of Claims 1 to 6, **characterized in that** the fastening element (10) comprises at least a fourth bearing portion (30) which rests against the outer side (130) of the installation cabinet (100) adjacent to the fastening opening (140).

8. A method for installing an installation cabinet (100) according to one of Claims 1 to 7, **characterized by** the following method steps:
a) providing the installation cabinet (100);
b) arranging the installation cabinet (100) in a wall shell opening (210) built into a wall shell (200);
c) providing the fastening device (1);
d) connecting the fastening element (10) of the fastening device (1) by means of guiding the fastening element (10) at least partially through the fastening opening (140) from the interior space (I) into the exterior space (A) with the first end (16) at the front, in a direction (R) running parallel to the cabinet base (114), wherein the fastening element (10) cooperates with the installation cabinet (100) such that the installation cabinet (100) is secured in the wall shell opening (210).

9. The method according to Claim 8, **characterized in that** a gripping arm (20), comprising a gripping portion (20a), of the fastening element (10) exerts a holding force (P) on a rear side (220) of the wall shell (200) in order to secure the installation cabinet (100) in the wall shell opening (210).

10. The method according to Claim 9, **characterized in that** the gripping arm (20) is configured as a spring element (21) and the holding force (P) is a restoring force (P') caused by a deformation of the spring element (21).

11. The method according to one of Claims 8 to 10, **characterized by** the following further method steps:
e) providing a pivoting element (50);
f) connecting the pivoting element (50) to the installation cabinet (100), wherein the pivoting element (50) is connected to the installation cabinet (100) such that the pivoting element (50) rests on a third bearing portion (28) of the fastening element (10) in order to exert a force (F) onto the third bearing portion (28).

12. The method according to Claim 11, **characterized in that** the pivoting element (50) is a screw element (52), wherein the screw element (52) is connected to a thread (150) of the installation cabinet (100) by the screw element (52) being turned into the thread (150), wherein the turning of the screw element (52) causes the screw element (52) to move in translation with respect to the thread (150) so that the force (F) is exerted on the third bearing portion (28).

## Revendications

1. Coffret d'installation électrique, en particulier coffret de distribution, avec au moins une ouverture de fixation (140), comprenant un dispositif de fixation (1) au moyen duquel le coffret d'installation électrique (100) peut être fixé dans une ouverture (210) de parement de cloison pratiquée dans un parement de cloison (200), sachant qu'en outre le dispositif de fixation (1) comprend au moins un élément de fixation (10) avec un premier côté (12) pouvant être opposé à une face arrière (220) du parement de cloison (200) et un deuxième côté (14) pouvant être tourné vers la face arrière (220) du parement de cloison (200),
sachant que l'élément de fixation (10) comprend un bras de préhension (20) avec une première extrémité (16) et une partie de préhension (20a) qui est disposée sur le deuxième côté (14) au voisinage de la première extrémité (16), sachant que la partie de préhension (20a) est à même d'engager la face arrière (220),
sachant que le coffret d'installation électrique (100) présente un côté intérieur (120) tourné vers un espace intérieur (I), un côté extérieur (130) tourné vers un espace extérieur (A), un fond de coffret (114) et l'au moins une ouverture de fixation (140), sachant que l'élément de fixation (10) est au moins partiellement passé de l'espace intérieur (I) vers l'espace extérieur (A) à travers l'ouverture de fixation (140) avec la première extrémité (16) en avant, dans une direction (R) s'étendant parallèlement au fond de coffret (114), afin d'amener la partie de préhension (20a) en contact avec la face arrière (220) du parement de cloison (200),
sachant que le premier côté (12) comprend une première partie d'appui (24) qui repose sur une première région d'appui (124) du coffret d'installation électrique (100) disposée au voisinage de l'ouverture de fixation (140), afin de former un pivot,
et sachant que le deuxième côté (14) comprend une deuxième partie d'appui (26) qui repose sur une deuxième région d'appui (126) du coffret d'installation électrique (100) disposée au voisinage de l'ouverture de fixation (140), afin de s'opposer à un mouvement de pivotement du bras de préhension (20) en éloignement de la face arrière (220).

2. Coffret d'installation électrique selon la revendication 1, **caractérisé en ce que** l'élément de fixation (10) présente une butée (22) au voisinage d'une deuxième extrémité (18),
sachant que le coffret d'installation électrique (100) comprend au moins une partie de butée (122) au voisinage de l'ouverture de fixation (140) sur le côté intérieur (120),
et sachant que la butée (22) est configurée de telle sorte qu'à la suite du passage partiel de l'élément de fixation (10) à travers l'ouverture de fixation (140), la butée (22) fait face à la partie de butée (122), de préférence s'applique contre la partie de butée (122).

3. Coffret d'installation électrique selon la revendication 2, **caractérisé en ce que** la butée (22) relie l'élément de fixation (10) au coffret d'installation électrique (100) de telle sorte que la butée (22) et/ou la deuxième extrémité (18) sont, lorsque l'élément de fixation (10) est passé au moins partiellement à travers l'ouverture de fixation (140), maintenues en engagement positif dans l'espace intérieur (I).

4. Coffret d'installation électrique selon l'une des revendications 1 à 3, **caractérisé en ce que** le bras de préhension (20) est réalisé sous la forme d'un élément (21) à effet de ressort.

5. Coffret d'installation électrique selon l'une des revendications 1 à 4, **caractérisé en ce que** le dispositif de fixation (1) comprend au moins un élément de pivotement (50), sachant que le deuxième côté (14) comprend une troisième partie d'appui (28) sur laquelle repose l'élément de pivotement (50), sachant que l'élément de pivotement (50) coopère avec le coffret d'installation électrique (100) afin d'exercer une force (F) sur la troisième partie d'appui (28).

6. Coffret d'installation électrique selon la revendication 5, **caractérisé en ce que** l'élément de pivotement (50) est réalisé sous la forme d'un élément fileté (52), sachant que l'élément fileté (52) coopère avec un filetage (150) du coffret d'installation électrique (100) afin d'exercer la force (F) sur la troisième partie d'appui (28), sachant de préférence que le filetage (150) est disposé sur le côté intérieur (120) du coffret d'installation électrique (100).

7. Coffret d'installation électrique selon l'une des revendications 1 à 6, **caractérisé en ce que** l'élément de fixation (10) comprend au moins une quatrième partie d'appui (30), qui repose au voisinage de l'ouverture de fixation (140) sur le côté extérieur (130) du coffret d'installation électrique (100).

8. Procédé de montage d'un coffret d'installation électrique (100) selon l'une des revendications 1 à 7, **caractérisé par** les étapes de procédé suivantes :
a) mise à disposition du coffret d'installation électrique (100) ;
b) disposition du coffret d'installation électrique (100) dans une ouverture (210) de parement de cloison pratiquée dans un parement de cloison (200);
c) mise à disposition du dispositif de fixation (1) ;
d) assemblage de l'élément de fixation (10) du dispositif de fixation (1) au moyen du passage au moins partiel de l'élément de fixation (10) de l'espace intérieur (I) dans l'espace extérieur (A) à travers l'ouverture de fixation (140) avec la première extrémité (16) en avant, dans une direction (R) s'étendant parallèlement au fond de coffret (114), sachant que l'élément de fixation (10) coopère avec le coffret d'installation électrique (100) de telle sorte que le coffret d'installation électrique (100) est fixé en position dans l'ouverture (210) de parement de cloison.

9. Procédé selon la revendication 8, **caractérisé en ce qu'**un bras de préhension (20), comprenant une partie de préhension (20a), de l'élément de fixation (10) exerce une force de maintien (P) sur une face arrière (220) du parement de cloison (200), afin de fixer en position le coffret d'installation électrique (100) dans l'ouverture (210) de parement de cloison.

10. Procédé selon la revendication 9, **caractérisé en ce que** le bras de préhension (20) est réalisé sous la forme d'un élément (21) à effet de ressort, et la force de maintien (P) est une force de rappel (P') consécutive à une déformation de l'élément (21) à effet de ressort.

11. Procédé selon l'une des revendications 8 à 10, **caractérisé par** les étapes de procédé supplémentaires suivantes :
e) mise à disposition d'un élément de pivotement (50) ;
f) assemblage de l'élément de pivotement (50) avec le coffret d'installation électrique (100), sachant que l'élément de pivotement (50) est assemblé au coffret d'installation électrique (100) de telle sorte que l'élément de pivotement (50) repose sur une troisième partie d'appui (28) de l'élément de fixation (10), afin d'exercer une force (F) sur la troisième partie d'appui (28).

12. Procédé selon la revendication 11, **caractérisé en ce que** l'élément de pivotement (50) est un élément fileté (52), sachant que l'élément fileté (52) est assemblé à un filetage (150) du coffret d'installation électrique (100) par une rotation de l'élément fileté (52) dans le filetage (150), sachant que la rotation de l'élément fileté (52) produit un mouvement de translation de l'élément fileté (52) par rapport au filetage (150), de sorte que la force (F) est exercée sur la troisième partie d'appui (28).
